# EUROPÄISCHE PATENTSCHRIFT

(11) **EP 0 428 036 B1**
(45) Veröffentlichungstag und Bekanntmachung des Hinweises auf die Patenterteilung: **05.10.1994**
(21) Anmeldenummer: 90121159.9
(22) Anmeldetag: 06.11.1990
(51) Int. Cl.: G02B 6/44

(54) **Optisches Kabel**
Optical cable
Câble optique

(30) Priorität: 14.11.1989 DE 3937804
(43) Veröffentlichungstag der Anmeldung: 22.05.1991
(73) Patentinhaber: KABEL RHEYDT Aktiengesellschaft, D-41179 Mönchengladbach (DE)
(72) Erfinder: Delage, Peter, W-4053 Jüchen 5 (DE); Moers, Herbert, W-4052 Korschenbroich 1 (DE); Hildebrandt, Hans-Georg, Dr., W-5600 Wuppertal 12 (DE); Hög, Georg, W-4050 Mönchengladbach 1 (DE)
(74) Vertreter: Mende, Eberhard, Dipl.-Ing.

(56) Entgegenhaltungen:
- DE-U- 8 906 993
- FR-A- 2 428 849
- FR-A- 2 543 729
- GB-A- 2 186 995
- PATENT ABSTRACTS OF JAPAN, Band 11, Nr. 178 (P-584)[2625], 09. Juni 1987 ; & JP-A-62 8111

## Beschreibung

Die Erfindung betrifft optisches Flachkabel für die Verlegung im Teilnehmeranschlußbereich nach dem Oberbegriff des Anspruchs 1. Bisher hatte man zum Anschließen von Teilnehmern an Breitbandkommunikationsnetze beispielsweise für jeden Teilnehmer einen Richtkoppler vorgesehen. An der Spleißstelle tritt aber eine nicht unerhebliche Zusatzdämpfung im optischen Übertragungsweg auf. Außerdem ist eine Spleißstelle mechanisch nicht so zuverlässig wie die unverletzte Glasfaser.

Bekannt ist bereits ein optisches Flachkabel (Jap.Anm. 60-147923) mit optischen Faserelementen sowie zug- und stauchfesten Elementen, das in einzelne Kabelsegmente dadurch auftrennbar ist, daß der Kabelmantel Einkerbungen aufweist. Zug- und stauchfeste Elemente befinden sich in den Randbereichen des Flachkabels.

Eine andere bekannte Lösung (FR-Anm. 2428849) sieht bei einem sog. Hybridkabel im Verbindungssteg Zugelemente vor, der gemeinsame Mantel weist keine entsprechenden Elemente auf.

Der Erfindung liegt die Aufgabe zugrunde, im Teilnehmeranschlußbereich eine spleißfreie Verbindung vom Hauptkabel zu den einzelnen Teilnehmern zu schaffen, welche besonders preisgünstig und leicht herstellbar ist. Diese Aufgabe wird nach der Erfindung durch die im Kennzeichen beschriebenen Merkmale des Anspruchs 1 gelöst. Weiterbildungen der Erfindung sind in den Unteransprüchen beschrieben.

Das optische Kabel nach der Erfindung eignet sich besonders zur Installation von Breitkommunikationsdiensten in Wohngebieten. Die Vorteile gegenüber dem Stand der Technik sind darin zu sehen, daß das Anschlußverfahren mit dem erfindungsgemäßen Kabel mit weniger Aufwand durchgeführt werden kann und die Anschlüsse eine hohe Zuverlässigkeit aufweisen.

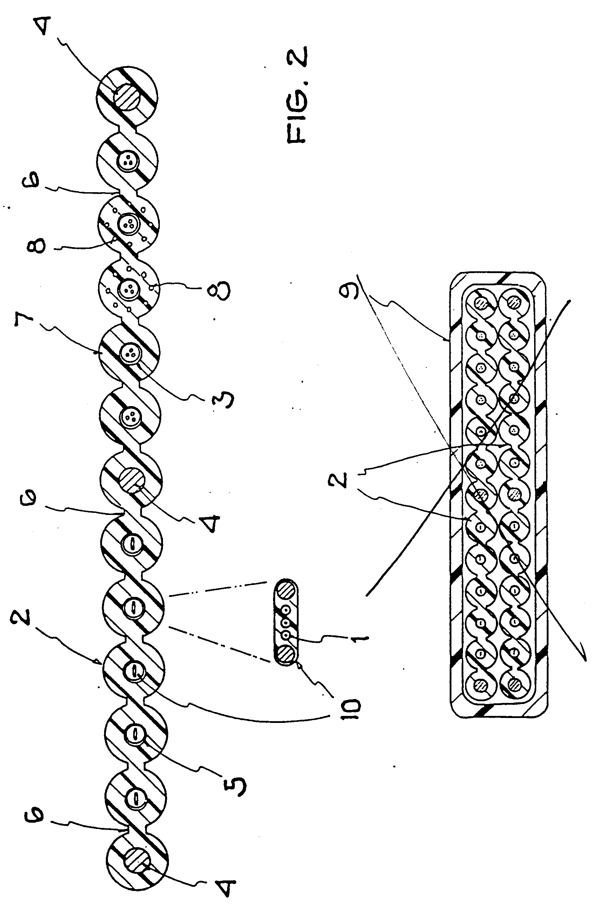

Ein Ausführungsbeispiel der Erfindung wird nachstehend anhand der Zeichnung näher erläutert; dabei zeigt Fig. 1 schematisch ein optisches Kabel mit Teilnehmeranschlüssen, Fig. 2 ein Flachkabel im Querschnitt und Fig. 3 ein Kabel aus mehreren Flachkabeln.

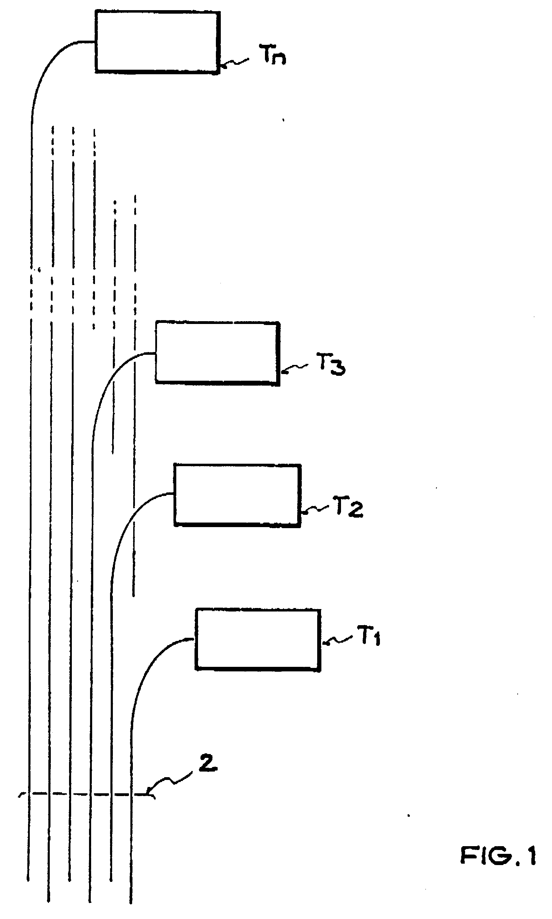

Das optische Kabel 2 verläuft im allgemeinen in einem Installationskanal an den Teilnehmern T1, T2, T3, .. Tn, vorbei (s. Fig. 1). Der Mantel 7 des Kabels wird in der Nähe eines Teilnehmers an den Stegen 6 aufgetrennt und ein optisches Element 3 oberhalb der Anschlußstelle durchgetrennt.

Das optische Element 3 wird soweit oberhalb der Anschlußstelle durchgetrennt, daß die Länge bis zur Anschlußstelle ausreicht, um nach dem Umbiegen des optischen Elements zum Teilnehmer Tk eine ausreichende Anschlußlänge zur Verfügung zu haben.

Das Flachkabel 2 ist in einzelne Segmente leicht auftrennbar. Dazu dienen die Stege 6 im Mantel 7 des Flachkabels 2. Nach dem beiderseitigen Auftrennen zweier Verbindungsstege 6 ist ein optisches Element noch von Teilen des Mantels 7 umhüllt und somit geschützt. Das Flachkabel 2 enhält zug- und stauchfeste Elemente 4, die ebenfalls von dem Mantel 7 umhüllt sind. Das optische Element 3 besitzt vorzugsweise eine separate Hülle 5. Der Mantel 7 enthält zug- und stauchfeste Elemente 8. In dieser Hülle liegt ein optisches Bändchenkabel 10 oder eine Bündelader. Das Bändchen 10 hat den Vorteil, daß es bei der Installation im Teilnehmerbereich leichter zu handhaben ist.

Die einzelnen Flachkabel 2 können in ihrem Mantel Zugentlastungselemente verteilt enthalten.

## Patentansprüche

1. Optisches Flachkabel (2) aus nebeneinander angeordneten Kabelsegmenten zur Verlegung im Teilnehmeranschlußbereich mit einem allen Segmenten gemeinsamen Außenmantel (7), wobei erste Segmente jeweils ein optisches Faserelement (3) und zweite Segmente jeweils ein zug- und stauchfestes Element (4) enthalten, und wobei der Außenmantel (7) Verbindungsstege (6) zwischen den einzelnen Kabelsegmenten bildet, so daß nach dem Auftrennen zweier Verbindungsstege (6) ein optisches Faserelement (3) noch von Teilen des Außenmantels (7) umhüllt ist, dadurch gekennzeichnet, daß die ersten Segmente um das zugehörige optische Faserelement (3) herum im Außenmantel (7) verteilt zweite zug- und stauchfeste Elemente (8) enthalten.

## Claims

1. Optical ribbon cable (2) comprising cable segments arranged next to one another for laying in the subscriber line region, having an outer sheath (7) common to all segments, in which first segments contain an optical fibre element (3) in each case and second segments contain a tension-proof and compression-proof element (4) in each case, and in which the outer sheath (7) forms connecting webs (6) between the individual cable segments in such a way that an optical fibre element (3) is still enclosed by parts of the outer sheath (7) after two connecting webs (6) have been parted, characterized in that the first segments contain second tension-proof and compression-proof elements (8) distributed in the outer sheath (7) around the associated optical fibre element (3).

## Revendications

1. Câble optique plat (2) constitué de segments de câble disposés les uns à côté des autres pour pose dans la zone du point de connexion d'abonnés, comportant une gaine extérieure (7) commune à tous les segments, câble dans lequel chacun des premiers segments contient un élément (3) formant fibre optique et chacun des seconds segments contient un élément (4) résistant à la traction et au refoulement, et dans lequel la gaine extérieure (7) forme des barrettes de liaison (6) entre les différents segments du câble, de sorte qu'après séparation de deux barrettes de liaison (6), un élément formant fibre optique (3) est encore entouré par des parties de la gaine extérieure (7), caractérisé par le fait que les premiers segments contiennent, répartis dans la gaine extérieure (7) autour de l'élément correspondant (3) formant fibre optique, des seconds éléments (8) résistant à la traction et au refoulement.
